Europäisches Patentamt

European Patent Office

Office européen des brevets

(19)

(11) Numéro de publication: **0 008 974**
**B1**

(12) **FASCICULE DE BREVET EUROPEEN**

(45) Date de publication du fascicule du brevet: **12.05.82**

(51) Int. Cl.³: **B 62 H 5/06**, B 62 J 35/00

(21) Numéro de dépôt: **79400575.1**

(22) Date de dépôt: **16.08.79**

(54) **Dispositif antivol pour cyclomoteur.**

(30) Priorité: **13.09.78 FR 7826335**

(43) Date de publication de la demande:
**19.03.80 Bulletin 80/6**

(45) Mention de la délivrance du brevet:
**12.05.82 Bulletin 82/19**

(84) Etats contractants désignés:
**BE DE GB IT LU NL**

(56) Documents cités:
**DE - C - 691 152**
**FR - A - 2 249 799**
**FR - A - 2 320 222**

(73) Titulaire: **CYCLES PEUGEOT Société dite:**
**Beaulieu-25700 Valentigney (FR)**

(72) Inventeur: **Lacroix, Bernard**
**2 Rue de la Vouivre**
**F-25200 Montbeliard (FR)**

(74) Mandataire: **Bressand, Georges et al,**
**c/o CABINET LAVOIX 2 Place d'Estienne d'Orves**
**F-75441 Paris Cedex 09 (FR)**

Courier Press, Leamington Spa, England.

## Dispositif antivol pour cyclomoteur

La plupart des cyclomoteurs vendus à l'heure actuelle sont équipés d'antivol dit de direction, qui consiste généralement en un verrou à clé qui peut être fermé lorsque la direction est braquée à fond, à gauche ou à droite, mais exige une clé pour être déverrouillé, de sorte que le véhicule est inutilisable pour celui qui ne possède pas cette clé.

On a également imaginé de munir les cyclomoteurs d'antivol dit de casque (FR 2 320 222) constitué par un crochet articulé au châssis, qui peut être ouvert lorsque la direction est en position non braquée, mais est condamné lorsqu'elle est braquée.

De même il a été proposé (DE 691 152) de protéger le contenu du réservoir en donnant au guidon une forme particulière qui lui permet, lorsqu'il est dans une position déterminée, d'interdire le retrait du bouchon du réservoir.

Toutefois la pompe et la boîte à outils ont également besoin d'être protégées.

Il est par ailleurs connu (FR—A—2 249 799) d'enfermer divers organes d'une monocyclette et notamment un orifice de remplissage du réservoir, une boîte à outils et autres, sous un capot ouvrant, éventuellement muni d'une serrure. Un casque ne peut trouver sa place sous un tel capot et plusieurs antivols restent nécessaires.

En conséquence la présente invention a pour but de fournir un dispositif antivol qui assure une protection simultanée des divers accessoires du cyclomoteur.

Cette invention a en effet pour objet un dispositif antivol qui comporte un verrou de direction qui peut être fermé lorsque la direction est braquée à fond dans une direction déterminée, et en outre un capot de couverture du réservoir d'essence muni d'un évidement à sa partie supérieure, un crochet formant, d'une part un doigt de pénétration dans l'évidement du capot, et d'autre part une tige coulissant axialement dans le tube de direction et, à l'intérieur de ce dernier tube, des moyens élastiques de rappel de la tige vers une position basse de blocage du doigt dans le logement, et des moyens d'interdiction de soulèvement de cette tige et de déverrouillage du doigt du crochet tant que ce dernier et le tube pivot de direction ne sont pas chacun dans une position angulaire déterminée correspondant à un braquage à fond en sens inverse du braquage de verrouillage de la direction.

Selon un mode de réalisation préféré, le réservoir d'essence comporte des logements latéraux destinés à recevoir des accessoires tels qu'une pompe de gonflage ou une boîte à outils et la capot recouvre ces éléments en même temps que le réservoir.

On obtient ainsi un verrouillage complet des accessoires du cyclomoteur lorsque la direction elle-même est bloquée et cela sans la présence d'organes complexes et nombreux, et par une manoeuvre extrêmement simple.

La description ci-dessous d'un mode de réalisation donné à titre d'exemple non limitatif, et représenté aux dessins annexés, fera d'ailleurs ressortir les avantages et caractéristiques de l'invention.

Sur ces dessins:

— la fig. 1 est une vue de côté, avec arrachement partiel, de la partie avant du cadre d'un cyclomoteur;

— la fig. 2 est une vue en coupe axiale, à plus grande échelle, de la partie supérieure du tube de direction du cyclomoteur de la figure 1;

— la fig. 3 est une vue en coupe suivant la ligne 3—3 de la figure 2;

— la fig. 4 est une vue analogue à la figure 2, en coupe dans un plan perpendiculaire à celui de cette figure;

— la fig. 5 est une vue en coupe suivant la ligne 5—5 de la figure 2;

— la fig. 6 est une vue partielle de dessus du cyclomoteur de la figure 1;

— la fig. 7 est une vue en coupe, à plus grande échelle, suivant la ligne 7—7 de la figure 2, en position de verrouillage de la direction.

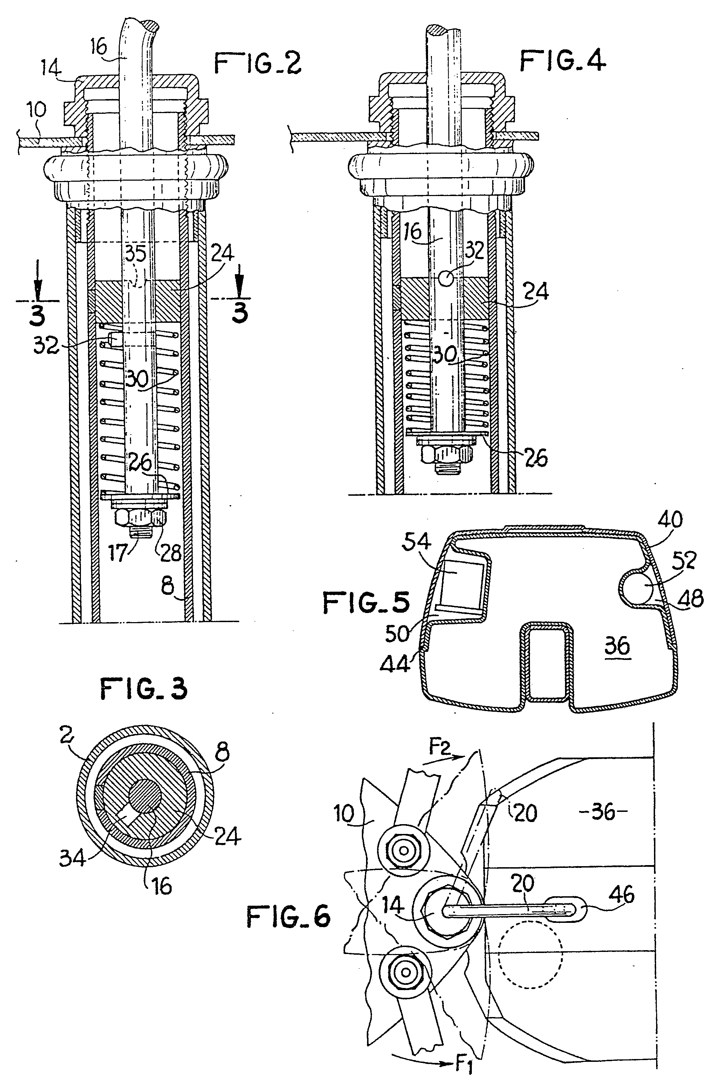

Le dispositif antivol de l'invention est tout particulièrement destiné à être monté à l'avant d'un cyclomoteur dont le cadre comporte, de manière classique, un tube de direction 2 relié à un tube inférieur 4 par un tube incliné 6. Le tube de direction 2 est traversé axialement par un tube pivot 8 solidaire d'une tête de fourche comportant notamment deux platines 10 et 12, respectivement supérieure et inférieure. A sa partie supérieure le tube pivot 8 est fileté extérieurement et se prolonge au-delà du tube de direction 2 pour traverser la platine 10 et être fermé par un bouchon fileté 14 (fig. 2). Un organe de verrouillage, non représenté, est interposé entre le tube pivot 8 et le tube de direction 2 et permet de verrouiller ces deux organes l'un par rapport à l'autre lorsque le tube pivot 8 a tourné jusqu'à la position correspondant à un braquage à fond, sur le côté du cyclomoteur; seule une intervention volontaire à l'aide d'une clé permet de retirer ce verrou et de rendre sa liberté de déplacement à la direction du cyclomoteur.

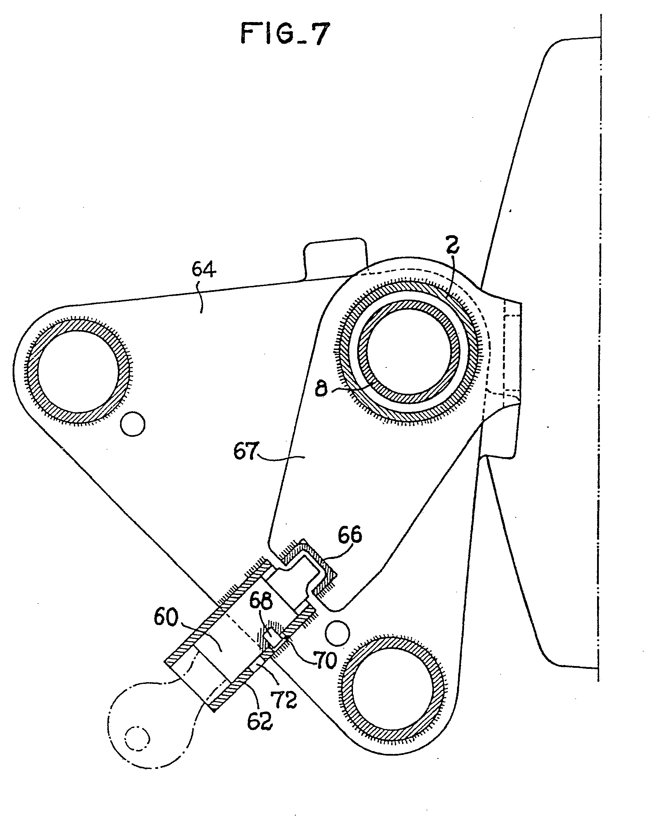

Les verrous de ce type sont connus et utilisés de manière courante sur les cyclomoteurs. Ils comportent habituellement (fig. 7) un pêne 60 coulissant dans un guide tabulaire 62, lui-même soudé à un organe de la fourche, par exemple la platine inférieure 64, et un logement 66 ménagé à l'extrémité d'une ferrure 67 liée au châssis, par exemple au tube de direction 2. Lorsque la direction est braquée à fond dans un sens déterminé, le logement 66 est aligné avec le pêne 60. Ce pêne coulissant 60 peut alors être soit engagé dans le logement lié au châssis, provoquant ainsi le blocage de la direction dans cette position, soit retiré du logement en provoquant la libération de la direction.

De préférence le pêne coulissant 60 comporte un ergot 68 escamotable au moyen d'une clé, et le tube guide comporte deux logements 70, 72, espacés sur sa longueur dans lesquels l'ergot peut pénétrer respectivement lorsque le pêne est en position déverrouillée et lorsqu'il est en position verrouillée. On comprend que la clé est indispensable pour escamoter l'ergot et passer de la position verrouillée à la position déverrouillée du pêne, donc de la direction, et inversement.

Dans d'autres réalisations le tube guide est lié au tube de direction et le logement est ménagé dans une ferrure liée à un organe de la fourche.

La fourche du cyclomoteur peut être de toutes formes appropriées et, par suite, n'a pas besoin d'être décrite ici plus en détail.

Selon l'invention, la partie supérieure du tube pivot 8 ainsi que le bouchon fileté 14 qui la ferme sont traversés axialement par une tige 16 qui est recourbée à sa partie supérieure, successivement latéralement puis vers le bas, pour constituer un crochet 20 dont l'extrémité est formée par un doigt oblique 22. A l'intérieur du tube pivot 8 la tige 16 traverse une douille 24 dans laquelle elle coulisse librement et, en outre, supporte à sa partie inférieure une rondelle 26 appuyée sur un écrou 28 vissé sur un prolongement fileté 17 de la tige 16. Un ressort 30, en appui d'une part contre la rondelle 26 et, d'autre part, sur la douille 24, tend à écarter ces deux organes et par suite à rappeler l'ensemble de la tige 16 et même du crochet 20 vers le bas, à l'intérieur du tube pivot 8.

Le déplacement vertical vers le haut de la tige 16 est, de plus, limité par la présence d'un ergot 32 fixé radialement sur cette tige. La douille 24 comporte toute-fois une rainure radiale 34 de dimension légèrement supérieure à celle de l'ergot 32 qui permet le passage de cet ergot lorsque les positions angulaires de la tige et du tube correspondent; en outre la surface supérieure de la douille 24 est munie d'une gorge semi-circulaire 35 qui est susceptible de recevoir l'ergot 32 lorsqu'il a traversé la rainure 34 et pivoté latéralement, la tige étant passée de la position basse représentée sur la figure 2 à la position haute représentée sur la figure 4.

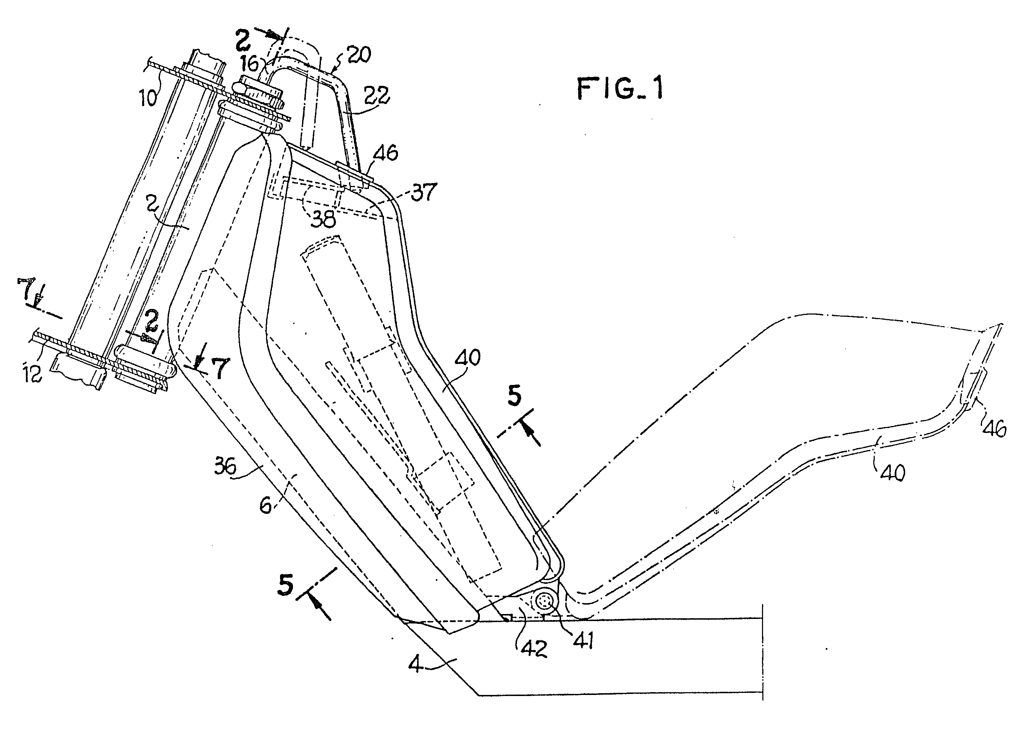

Le cyclomoteur comporte en outre un réservoir d'essence ou autre carburant 36, qui est emboîté sur le tube incliné du cadre (fig. 1) et fixé sur le tube de direction 2. Ce réservoir 36 comporte à sa partie supérieure une surface plane 37 comportant un orifice de remplissage 38. Un capot 40 est articulé sur un axe 41 porté par une chape 42 solidaire à la fois du tube inférieur 4 et du tube incliné 6 et disposée en dessous du réservoir 36. Le fond de ce capot et ces deux parois latérales ont des dimensions et une forme qui leur permettent d'épouser le contour du réservoir 36. De préférence toutefois les parois latérales de ce réservoir présentent chacune un décrochement 44 formant un épaulement d'appui du capot 40 lorsque celui-ci est rabattu au-dessus du réservoir 36, c'est-à-dire dans la position indiquée en trait plein sur la figure 1. A sa partie supérieure le capot 40 comporte un évidement embouti 46 de réception de l'extrémité du doigt 22 du crochet 20 en position de verrouillage. Ce verrouillage correspond à la position basse de la tige 16 dans laquelle l'ergot 32 se trouve en dessous de la douille 24 et est maintenu dans cette position à la fois par l'action du ressort 30 et par le fait qu'il ne peut pas traverser la douille 24. En conséquence le crochet 20 ne peut être soulevé en dehors du logement 46. Le capot 40 est, par suite, verrouillé sur le réservoir 36 ce qui interdit l'accès à l'orifice de remplissage 38.

Il est clair qu'un casque peut être enfilé sur le crochet 20 avant son verrouillage sur le capot 40 et qu'ainsi ce casque est protégé contre le vol.

Pour permettre le déverrouillage de capot 40 et le libre accès, d'une part à l'orifice de remplissage 38 et/ou d'autre part à celle d'un casque enfilé sur le crochet 20, il est nécessaire de déplacer l'ensemble du tube pivot 8 pour mettre en alignement l'ergot 32 de la tige 16 et la rainure 34 de la douille 24. Les positions relatives de ces organes sont choisies de manière telle que cet alignement ne peut se produire que lorsque le crochet 20 est dans la position de verrouillage, c'est-à-dire que le doigt 22 se trouve dans le logement 46, et que le tube pivot 8 entraînant l'ensemble de la fourche est braqué totalement sur l'un des côtés du cyclomoteur. Selon un mode de réalisation préféré, cette position de déverrouillage correspond à un braquage à fond de la direction du cyclomoteur en sens inverse du braquage nécessaire pour déverrouiller le verrou de direction. Par exemple si le braquage nécessaire pour obtenir le verrouillage ou le déverrouillage de la direction est un braquage à fond sur le côté gauche du cyclomoteur, c'est-à-dire selon le flèche $F_1$ de la figure 6, le braquage nécessaire pour le déverrouillage du crochet 20 sera un braquage vers la droite, c'est-à-dire dans le sens de la flèche $F_2$ de cette même figure 6.

Lorsque la direction du cyclomoteur a été ainsi braquée à fond vers la droite, le crochet 20 peut être soulevé, la tige 16 effectuant un déplacement vertical vers le haut à l'intérieur du tube pivot 8, de sorte que l'ergot 32 traverse la douille 24 dans la rainure 34 et passe au-dessus de cette douille. Le doigt 22 est ainsi sorti du logement 46. Il peut alors être poussé latéralement de façon à faire tourner la tige 16 autour de son axe et à amener l'ergot 32 au droit de la gorge 35 dans laquelle il peut s'emboîter. La tige 16 est alors rendue solidaire en rotation du tube pivot 8 et le crochet 20 suit les mouvements de la direction du cyclomoteur mais ne constitue jamais un organe gênant pour le conducteur.

Lorsqu'il est nécessaire à nouveau de verrouiller les organes du cyclomoteur, le crochet 20 peut être soulevé pour dégager l'ergot 32 de la gorge 35, puis un pivotement autour de l'axe de la tige 16 amène cet ergot 32 au droit de la rainure 34, position dans laquelle le doigt 22 se trouve juste au-dessus du logement 46. Le ressort 30 rappelle alors automatiquement l'ergot 32 vers sa position basse, en dessous de la douille 24, ce qui serre le doigt 22 dans l'évidement 46 et provoque un nouveau verrouillage du réservoir 36 ainsi, bien entendu, que d'un casque ou tout autre accessoire enfilé préalablement sur le crochet 20. L'ensemble de la fourche entraînant le tube pivot 8 peut alors être déplacé de la manière habituelle dans le sens de la flèche $F_1$ pour être amené dans la position de braquage à fond qui permet le verrouillage du verrou de direction. Il est bien évident que lorsque la direction est dans cette position les actions combinées du ressort 30 et de la douille 24 interdisent tout soulèvement du crochet 20 et toute possibilité d'accès au casque ou au réservoir 36.

Selon un mode de réalisation préféré, ce réservoir 36 comporte au moins un et de préférence deux logements latéraux, respectivement 48 et 50, destinés par exemple à contenir l'un une pompe de gonflage 52 et l'autre une boîte d'outillage 54 qui sont ainsi protégées en même temps que le réservoir 36 par le capot 40.

Grâce à une telle disposition, on dispose d'un dispositif antivol qui protège l'ensemble des accessoires importants du cyclomoteur en même temps et par une manoeuvre extrêmement simple. Tous les accessoires tels que le réservoir, la pompe, les outils et même le casque, et autres, sont protégés par un même organe et verrouillés ensemble par le verrou de direction. En outre la pompe et la boîte d'outillage sont protégés contre les intempéries par la présence du capot de couverture du réservoir d'essence. L'accès à ces organes reste toutefois extrêmement simple et ne nécessite pas de manoeuvre ni de démontage complexe.

## Revendications

1. Dispositif antivol pour cyclomoteur dont le réservoir de carburant (36) est monté sur le cadre, comportant un verrou de direction qui peut être fermé lors d'un braquage à fond de la direction, caractérisé en ce qu'il comporte en outre un capot (40) de couverture du réservoir de carburant muni d'un évidement (46) à sa partie supérieure, un crochet (20) formant, d'une part un doigt (22) de pénétration dans l'évidement du capot, et d'autre part une tige (16) coulissant axialement dans le tube de direction, et, à l'intérieur de ce tube, des moyens élastiques (30) de rappel de la tige vers une position basse de blocage du doigt dans l'évidement et des moyens (32, 24) d'interdiction du soulèvement de la tige et du déverrouillage du doigt du crochet tant que ce dernier et le tube pivot (8) de la direction ne sont pas, chacun, dans une position angulaire déterminée correspondant à un braquage à fond en sens inverse du braquage de verrouillage de la direction.

2. Dispositif suivant la revendication 1, caractérisé en ce qu'il comporte des moyens (32, 35) de solidarisation en rotation du tube pivot de direction (8) et du crochet (20) en position déverrouillée.

3. Dispositif suivant l'une des revendications 1 et 2, caractérisé en ce que le réservoir d'essence (36) comporte au moins un logement latéral (48, 50) de réception d'une pompe, d'une boîte à outils ou d'autres accessoires, et en ce que les parois latérales du capot (40) ferment ce ou ces logements.

4. Dispositif suivant l'une des revendications 1 à 3, caractérisé en ce que le capot (40) est articulé (en 41) sur le cadre (4) du véhicule, en dessous du réservoir de carburant.

5. Dispositif suivant l'une des revendications 1 à 4, caractérisé en ce que la tige (16) traverse librement une douille (24) solidaire du tube pivot de direction (8) et est rappelée en position basse de verrouillage par un ressort hélicoïdal (30) monté entre son extrémité inférieure et la douille.

6. Dispositif suivant la revendication 5, caractérisé en ce que la tige (16) porte un ergot radial (32) tandis que la douille (24) est percée d'une rainure radiale (34) permettant le passage de l'ergot (32) lorsque le crochet (20) est dirigé vers l'évidement du capot (40) et que le tube pivot (8) est braqué à fond dans une direction déterminée.

7. Dispositif suivant l'une des revendications 5 et 6, caractérisé en ce que la douille (24) comporte à sa partie supérieure une gorge radiale (35) de réception de l'ergot (32) de la tige et coopère avec cet ergot pour rendre la tige solidaire en rotation du tube pivot (8) dans la position déverrouillée.

## Claims

1. An antitheft device for a moped whose petrol tank (36) is mounted on the frame, comprising a steering mechanism lock which may be closed upon the turning of the steering mechanism to the full, characterized in that it comprises a hood (40) for covering the petrol tank provided with a recess (46) in its upper part, a hook (20) forming both a finger member (22) for penetrating the recess of the hood, and an axially slidable rod (16) in the steering tube and, inside said tube, elastically yieldable means (30) for biasing the rod to a lower position for locking the finger member in the recess and means for precluding the raising of the rod and the unlocking of the finger member of the hook so long as the hook and the pivot tube (8) of the steering mechanism are not each in a given angular position corresponding to a turning of the steering mechanism to the full in a direction opposed to the turning of the steering mechanism for locking the steering mechanism.

2. A device as claimed in claim 1, characterized in that it comprises means (32, 35) for rendering the pivot tube (8) of the steering mechanism rigid with the hook (20) as concerns rotation in the unlocked position.

3. A device as claimed in claim 1 or 2, characterized in that the petrol tank (36) comprises at least one lateral recess (48, 50) for receiving a pump, a tool box or other accessories and the side walls of the hood (40) close said recess or recesses.

4. A device as claimed in claim 1, 2 or 3, characterized in that the hood (40) is pivotally mounted at (41) on the frame (4) of the moped under the petrol tank.

5. A device as claimed in any one of the claims 1 to 4, characterized in that the rod (16) freely extends through a sleeve (24) which is rigid with the pivot tube (8) of the steering mechanism and is biased to the lower locking position by a coil spring (30) which is mounted between its lower end and the sleeve.

6. A device as claimed in claim 5, characterized in that the rod (16) carries a radial pin (32) and the sleeve (24) is provided with a radial groove (34) allowing the passage of the pin (32) when the hook (20) is oriented toward the recess of the hood (40) and the pivot tube (8) is turned to the full in a given direction.

7. A device as claimed in claim 5 or 6, characterized in that the sleeve (24) has in its upper part a radial groove (35) for receiving the pin (32) of the rod and cooperates with said pin so as to render the rod rigid with the pivot tube (8) as concerns rotation in said unlocked position.

**Patentansprüche**

1. Diebstrahlsicherung für ein Motorfahrrad mit am Rahmen angeordnetem Treibstofftank, bestehend aus einer bei vollem Lenkeinschlag verriegelbaren Lenksperre, gekennzeichnet durch eine Abdeckhaube (40) für den Treibstofftank, in deren oberem Ende eine Ausnehmung (46) ausgebildet ist, durch einen hakenförmigen Sperrbügel (20), der mit seinem einen Ende über einen Finger (22) in die Ausnehmung der Abdeckhaube eingreifbar ist und am anderen Ende einen im Lenkrohr axial verschiebbaren Schaftabschnitt (16) aufweist, durch im Inneren des Lenkrohres angeordnete elastische Rückholelemente (30), durch welche dieser Schaftabschnitt in eine untere Stellung bewegbar ist, in der der Finger in die Ausnehmung eingreift und durch Elemente (32, 34), durch welche ein Anheben dieses Schaftabschnittes und eine Freigabe der Ausnehmung durch den Finger sperrbar ist, solange der Finger und das schwenkbare Rohr (8) nicht jeweils eine bestimmte, einem dem sperrenden Lenkeinschlag entgegengesetzten Einschlag entsprechende Winkelstellung einnehmen.

2. Diebstahlsicherung nach Anspruch 1, gekennzeichnet durch Elemente (32, 35) zur drehgesperrten Verbindung des schwenkbaren Rohrs (8) und des Sperrbügels (20) in entriegelter Stellung.

3. Diebstahlsicherung nach einem der Ansprüche 1 und 2, dadurch gekennzeichnet, daß der Treibstofftank (36) mindestens eine seitliche Vertiefung (48, 50) zur Aufnahme einer Luftpumpe, eines Werkzeugkastens oder anderen Zubehörs aufweist und daß diese Vertiefung oder Vertiefungen durch die Seitenwände der Abdeckhaube (40) abdeckbar sind.

4. Diebstahlsicherung nach einem der vorhergehenden Ansprüche, dadurch gekennzeichnet, daß die Abdeckhaube (40) unterhalb (bei 41) des Treibstofftanks schwenkbar am Fahrzeugrahmen (4) befestigt ist.

5. Diebstahlsicherung nach einem der vorhergehenden Ansprüche, dadurch gekennzeichnet, daß sich der Schaftabschnitt (16) frei durch eine fest mit dem schwenkbaren Rohr (8) verbundene Buchse (24) erstreckt und mittels eine sich zwischen seinem unteren Schaftende und der Buchse abstützenden Schraubenfeder (30) in seine untere Sperrstellung drückbar ist.

6. Diebstahlsicherung nach Anspruch 5, dadurch gekennzeichnet, daß am Schaftabschnitt (16) eine radialer Zapfen (32) ausgebildet ist und daß die Buchse (24) einen Radialschlitz (34) aufweist für den Durchtritt des Zapfens (32) bei Ausrichtung des Sperrbügels (20) mit der Ausnehmung in der Haube (40) und vollem Einschlag des schwenkbaren Rohrs (8) in die eine Richtung.

7. Diebstahlsicherung nach einem der Ansprüche 5 und 6, dadurch gekennzeichnet, daß die Buchse (24) an ihrem oberen Ende eine radiale Nut (35) zur Aufnahme des Zapfens (32) des Schaftabschnitts aufweist und mit diesem Zapfen zur drehgesperrten Verbindung des Schaftabschnitts mit dem schwenkbaren Rohr (8) in entriegelter Stellung zusammenwirkt.

FIG_1

0 008 974

FIG.2

FIG.4

FIG.5

FIG.3

FIG.6

# FIG_7